# EUROPEAN PATENT SPECIFICATION

(11) **EP 3 297 964 B1**
(45) Date of publication and mention of the grant of the patent: **01.09.2021**
(21) Application number: 16726715.2
(22) Date of filing: 17.05.2016
(51) Int. Cl.: B65H 20/02, B65H 23/032, C03B 33/023, C03B 33/037, C03B 35/24, C03B 17/06, B65H 20/32, C03B 33/09

(54) **CONTINUOUS PROCESSING OF FLEXIBLE GLASS RIBBON WITH REDUCED MECHANICAL STRESS**
KONTINUIERLICHE VERARBEITUNG VON FLEXIBLEM GLASBAND MIT REDUZIERTER MECHANISCHER BELASTUNG
USINAGE CONTINU DE RUBAN DE VERRE SOUPLE À CONTRAINTE MÉCANIQUE RÉDUITE

(30) Priority: 18.05.2015 US 201562163035 P
(43) Date of publication of application: 28.03.2018
(73) Proprietor: Corning Incorporated, Corning, New York 14831 (US)
(72) Inventor: BOOTH, Robertson Dewhurst, Elmira, New York 14905 (US); BRACKLEY, Douglas Edward, Horseheads, New York 14845 (US); DEMING, Scott Winfield, Elmira, New York 14905 (US); KITTLESON, Andrew Peter, Honeoye Falls, New York 14472 (US); KUDVA, Gautam Narendra, Horseheads, New York 14845 (US); MARSHALL, Dale Charles, Brockport, New York 14420 (US); MERZ, Gary Edward, Rochester, New York 14610 (US); MILLER, Eric Lee, Corning, New York 14830 (US); MORSE, Kathleen Elizabeth, Painted Post, New York 14870 (US); TRACY, Ian David, San Jose, California 95134 (US)
(74) Representative: Elkington and Fife LLP
(86) International application number: PCT/US2016/032808
(87) International publication number: WO 2016/187172

(56) References cited:
- EP-A1- 2 505 566
- WO-A1-2015/029669
- JP-A- 2002 193 630
- JP-A- 2008 019 102
- JP-A- 2011 031 555
- JP-A- 2011 121 791
- US-A1- 2007 169 849
- US-A1- 2008 276 646
- US-A1- 2014 130 649
- US-B1- 6 364 240

## Description

### TECHNICAL FIELD

The present invention relates to apparatus and methods for continuous processing of flexible glass ribbon and, in particular, methods for continuous processing of flexible glass ribbon with reduced mechanical stress.

### BACKGROUND

Glass processing apparatus are commonly used to form various glass products such as LCD sheet glass. Glass substrates in flexible electronic applications are becoming thinner and lighter. Glass substrates having thicknesses lower than 0.5 mm, such as less than 0.35 mm, such as 0.1 mm or even thinner can be desirable for certain display applications, especially portable electronic devices such as laptop computers, handheld devices and the like.

Flexible glass substrates, such as glass substrates used in the manufacture of display devices, are often processed in sheet form. Such processing can include, for example, the deposition of thin film electronics onto the substrate. Sheet form handling has relatively slow processing speeds compared to continuous processes, since sheets must be individually transported, fixtured, processed and removed. Continuous processing of flexible glass substrates in ribbon form can provide relatively faster manufacturing rates. One benefit for a thin glass substrate is that the flexibility afforded by the thin ribbon allows it to be used in processes utilizing rolls of the material.

Japanese patent application No. 2008 019102 A is directed to a glass processing method which reduces the need to correct inherent curvature. International patent application No. 2015/029669 is directed to a glass processing method including edge trimming.

### SUMMARY

The present concept involves continuous processing of flexible glass ribbon. Continuous processing of flexible glass ribbon can include connections among a number of process steps, such as forming, cutting, spooling, etc. Presented herein is a process of improved laser edge/bead removal that maintains robust edge separation by reducing the magnitude of disturbance from mechanical stresses due to conveyance geometry and web motion relative to the driving stresses of the laser separation device.

Important considerations in manipulating the conveyance path and geometry to minimize mechanical stresses and stress variation at the crack tip (at which point portions of the glass web are separated from one another) include (i) stiffness of beaded section of web, (ii) residual stress and shape of web entering laser separation area, and (iii) bead trim conveyance path. Inherent to forming processes are non-uniformities in the incoming web that generate mechanical stresses in the ribbon itself. The beaded section of the incoming web can be significantly thicker than the product section (up to 12X, for example). The incoming web can have cross web residual stress and shape. To minimize the effects of mechanical stress at the crack tip, air bearing curvature is manipulated to balance residual stress and bead stiffness contributions to crack tip stress. If the web is forced to follow a radius that is too small, the beaded section of the web will not conform to the air bearing support with the same curvature as the body of the web, causing a web rotation that drives stress to the crack tip. If the web is forced to follow a radius that is too large, the shape induced by residual stress will not be accommodated and will result in additional stress at the crack tip. In the limit of a flat support, the residual stress will have no preferential direction for mechanical relief and will result in random distortion in the web surface which will drive stress variation at the crack tip. Additionally the conveyance of the bead trim away from the cut zone must maintain separation of the newly formed edges while minimizing additional mechanical stresses. This can be achieved through a combination of vertical separation and a horizontal separation. In addition to providing an advantageous conveyance path geometry, stabilization is added to minimize stress variance. For example, processes used to separate the beaded web into sections tend to drive motion into the bead which can translate to the separation zone and increase mechanical stress at the crack tip. This vertical and horizontal web noise can be mechanically dampened in and around the cutting zone through application of devices such as nips, stiff air bearings or belts, for example.

According to a first aspect, a method of continuous processing of flexible glass ribbon having a thickness of no more than 0.35 mm using a glass processing apparatus is provided. The method includes continuously feeding the flexible glass ribbon through the glass processing apparatus, the glass processing apparatus including a first processing zone, a second processing zone and a third processing zone. Feed rate of the flexible glass ribbon is controlled through each of the first processing zone, the second processing zone and the third processing zone using a global control device. The second processing zone has a conveyance path for the flexible glass ribbon through a cutting zone having a radius of curvature of from 100 inches to 400 inches (254 cm to 1016 cm).

According to a second aspect, there is provided the method of aspect 1, wherein the radius of curvature is about 250 inches (635 cm).

According to a third aspect, there is provided the method of aspect 1 or aspect 2, further comprising separating an edge of the flexible glass ribbon as the flexible glass ribbon moves by a cutting device within the cutting zone forming a continuous strip of edge trim connected to an upstream portion of the flexible glass ribbon.

According to a fourth aspect, there is provided the method of aspect 3, wherein the edge trim has a conveyance path that is different from the conveyance path of a central portion of the flexible glass ribbon.

According to a fifth aspect, there is provided the method of any one of aspects 1-4, wherein the conveyance path has an upstream portion that is upstream of the cutting zone, the upstream portion having a radius of curvature that is different than the radius of curvature of the cutting zone.

According to a sixth aspect, there is provided the method of aspect 5, wherein the radius of curvature of the upstream portion is at least about 72 inches (83 cm).

According to a seventh aspect, there is provided the method of any one of aspects 1-6, wherein the conveyance path has a downstream portion that is downstream of the cutting zone, the downstream portion having a radius of curvature that is different than the radius of curvature of the cutting zone.

According to an eighth aspect, there is provided the method of aspect 7, wherein the radius of curvature of the downstream portion is at least about 72 inches (83 cm).

According to a ninth aspect, there is provided the method of any one of aspects 1-8, further comprising stabilizing the flexible glass ribbon within the cutting zone using at least one drive roller pair.

According to a tenth aspect, there is provided the method of any one of aspects 1-9, wherein the flexible glass ribbon further comprises an overhang portion that extends freely beyond an outermost air bearing in the cutting zone.

According to an eleventh aspect, the overhang portion extends freely beyond the outermost air bearing in the cutting zone by a distance of about 1 inch to about 4 inches.

According to a twelfth aspect, a glass processing apparatus that processes a flexible glass ribbon having a thickness of no more than 0.35 mm includes a forming apparatus in a first processing zone. The forming apparatus is configured to form the flexible glass ribbon in the first processing zone. An edge trimming apparatus is provided in a cutting zone of a second processing zone. The edge trimming apparatus is configured to separate an edge of the flexible glass ribbon as the flexible glass ribbon moves by a cutting device within the cutting zone forming a continuous strip of edge trim connected to a central portion of the flexible glass ribbon. The second processing zone has a conveyance path for the flexible glass ribbon through the cutting zone, the conveyance path having a radius of curvature of from 100 inches to 400 inches (from 254 cm to about 1016 cm).

According to a thirteenth aspect, there is provided the method of aspect 12, wherein the radius of curvature is about 250 inches (635 cm).

According to a fourteenth aspect, there is provided the method of aspect 12 or aspect 13, wherein a central portion of the flexible glass ribbon has the conveyance path, the continuous strip of edge trim having a different conveyance path downstream of the edge trimming apparatus.

According to a fifteenth aspect, there is provided the method of any one of aspects 12-14, wherein the conveyance path has an upstream portion that is upstream of the cutting zone, the upstream portion having a radius of curvature that is different than the radius of curvature of the conveyance path through the cutting zone.

According to a sixteenth aspect, there is provided the method of aspect 15, wherein the radius of curvature of the upstream portion is at least about 72 inches (183 cm).

According to a seventeenth aspect, there is provided the method of any one of aspects 12-16, wherein the conveyance path has a downstream portion that is downstream of the cutting zone, the downstream portion having a radius of curvature that is different than the radius of curvature of the conveyance path through the cutting zone.

According to an eighteenth aspect, there is provided the method of aspect 17, wherein the radius of curvature of the downstream portion is at least about 72 inches (183 cm).

According to a nineteenth aspect, there is provided the apparatus of any one of aspects 12-18, further comprising at least one drive roller pair configured to stabilize the flexible glass ribbon within the cutting zone.

According to a twentieth aspect, there is provided the apparatus of any one of aspects 1-19, wherein the cutting device comprises a laser.

According to a twenty-first aspect, there is provided the method or apparatus of any one of aspects 1-20, further comprising stabilizing the flexible glass ribbon through the cutting zone using a high stiffness air bearing.

According to a twenty-second aspect, there is provided the method or apparatus of any one of aspects 1-21, wherein the lateral separation between web portions, at a position of 725 mm downstream from the crack tip, is controlled to be 0.2 mm or less.

Additional features and advantages will be set forth in the detailed description which follows, and in part will be readily apparent to those skilled in the art from the description or recognized by practicing the invention as exemplified in the written description and the appended drawings and as defined in the appended claims. It is to be understood that both the foregoing general description and the following detailed description are merely exemplary of the invention, and are intended to provide an overview or framework to understanding the nature and character of the invention as it is claimed.

The accompanying drawings are included to provide a further understanding of principles of the invention, and are incorporated in and constitute a part of this specification. The drawings illustrate one or more embodiment(s), and together with the description serve to explain, by way of example, principles and operation of the invention. It is to be understood that various features of the invention disclosed in this specification and in the drawings can be used in any and all combinations.

### BRIEF DESCRIPTION OF THE DRAWINGS

FIG. 1 is a schematic view of an embodiment of a flexible glass forming method and apparatus;
FIG. 2 is a schematic, detail view of the flexible glass forming process and apparatus of FIG. 1 according to one or more embodiments described herein;
FIG. 3 is a schematic, plan view of an embodiment of an edge trimming method and apparatus according to one or more embodiments described herein;
FIG. 4 is a schematic, side view of the edge trimming method and apparatus of FIG. 3 according to one or more embodiments described herein;
FIG. 5 is a schematic, plan view of an embodiment of a glass processing apparatus over one half of a width of the flexible glass ribbon that can include the flexible glass forming apparatus of FIG. 1, the edge trimming apparatus of FIG. 3 and a glass winding apparatus;
FIG. 6 is a perspective isometric view of the edge trimming method and apparatus of FIG. 3 according to one or more embodiments described herein;
FIG. 7 is a perspective view of a high stiffness bearing assembly for use in the edge trimming method and apparatus of FIG. 6 according to one or more embodiments described herein;
FIG. 8 is a side view of the edge trimming method and apparatus of FIG. 6 according to one or more embodiments described herein;
FIG. 9 illustrates an exaggerated schematic shape for a flexible glass web with exemplary bead thickness and residual stress being conveyed along a flat conveyance path;
FIG. 10 illustrates modeled stress versus radius of curvature R for a flexible glass ribbon with exemplary bead thickness and residual stress;
FIG. 11 illustrates an exaggerated schematic displacement diagram showing bead roll effect of a flexible glass ribbon with exemplary thickness profile but without residual stress to illustrate bead stiffness effects when bending over a defined radius of curvature;
FIG. 12 is a diagrammatic illustration of a conveyance path P for the flexible glass ribbon according to one or more embodiments described herein;
FIG. 13 illustrates modeled crack tip opening stress from lateral separation of edges of the flexible glass ribbon;
FIG. 14 illustrates a flexible glass ribbon with an overhang portion being conveyed through the edge trimming method and apparatus of FIG. 6 according to one or more embodiments described herein;
FIG. 15 illustrates modeled stresses at upper and lower surfaces of the flexible glass ribbon versus overhang distance.
FIG. 16 is a perspective isometric view of the edge trimming method and apparatus similar to that in FIG. 6 according to one or more embodiments described herein; and
FIG. 17 is a side view of the edge trimming method and apparatus of FIG. 16 according to one or more embodiments descried herein.

### DETAILED DESCRIPTION

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein. Moreover, descriptions of well-known devices, methods and materials may be omitted so as not to obscure the description of various principles of the present disclosure. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

Embodiments described herein generally relate to continuous processing of flexible glass ribbon that includes continuous separation of beaded edges of a flexible glass web. To maintain continuous controlled crack propagation, it can be important to minimize mechanical stresses magnitude and variance so that the laser can control the crack velocity to match the web velocity. Disclosed herein is a laser separation process that reduces mechanical stress and stress variation in the flexible glass web at the cutting zone to improve controlled crack propagation process capability of flexible glass web.

While glass is generally known as a brittle material, inflexible and prone to scratching, chipping and fracture, glass having a thin cross section can in fact be quite flexible. Glass in long thin sheets or ribbons can be wound and un-wound from rolls, much like paper or plastic film.

Maintaining lateral alignment of the glass ribbon as the glass ribbon travels through glass manufacturing equipment may be complicated by misalignment of components of the glass manufacturing equipment. Further, instabilities, perturbations, vibrations, and transient effects that may exist in manufacturing environments or in processing and handling equipment may cause intermittent or extended misalignment of the glass ribbon to occur. Lack of alignment can cause the high stiffness glass web to tilt cross-web and oscillate laterally. In extreme cases, the instabilities, perturbations, vibrations, and transient effects of the glass ribbon may lead to fracture.

Some glass ribbons are processed by continuously separating thickened edge beads from the glass ribbon. During the bead removal process, the thickened edge beads are separated from the glass ribbon and are conveyed down an alternate path than the product glass ribbon. The thickened beads impart stress on the glass ribbon at the separation point where the glass ribbon is separated from the thickened edge beads. The relative angle between the glass ribbon and the separated thickened edge beads affects the stress at the separation point. Misalignment causing lateral variation of the glass ribbon in the bead separation process can cause stress variance at the crack tip or separation point (point where a crack is being propagated through the glass to separate one portion from another), potentially causing ribbon breakage or poor edge separation attributes, such as inferior edge strength and edge damage. In some embodiments, an edge strength of at least about 100 MPA, such as at least about 200 MPa may be maintained at the cut edge after separation of the bead.

The apparatus and methods described herein introduce web stability and mechanical isolation of the laser separation process, so that mechanically induced stresses do not adversely affect the desired stress intended to be induced by the laser to propagate the crack tip. First, multiple sets of pinch drives, and high stiffness pressure/vacuum air bearings may be used throughout conveyance of the flexible glass ribbon to manage web tension, lateral position, and vertical position in the crack tip zone. By pressure/vacuum air bearings, it is meant that the air bearing can apply pressure, apply vacuum, or apply both pressure and vacuum at the same time. Second, advantageously a separate conveyance path may be provided for bead/cullet management to isolate vibrations due to cullet creation from reaching the laser separation zone. For example, a second free loop downstream may be added as well as an increased overall conveyance path radius (which can have the effect of reducing the transmission of perturbations back to the crack tip). Third, an overhang distance of the flexible glass ribbon on each side of the bead removal hardware can be selected to reduce bending stresses due to bead cantilever. Each of these features will be described in greater detail below.

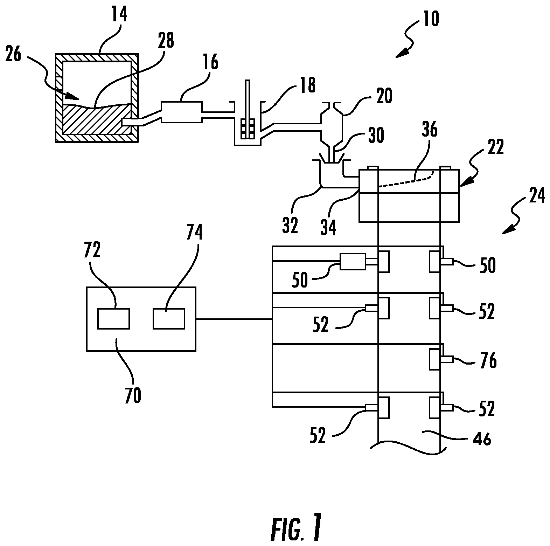

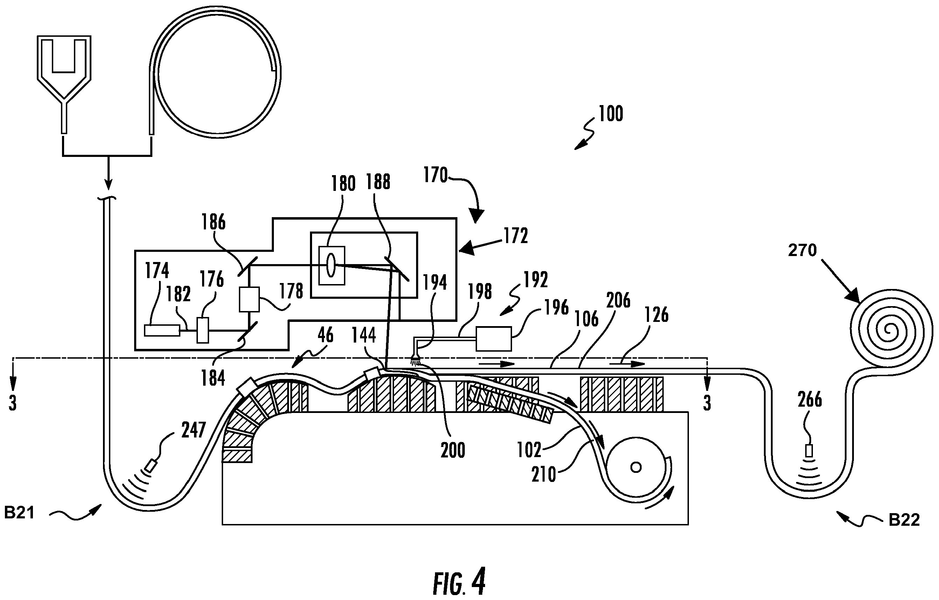

Referring to FIG. 1, an exemplary glass manufacturing apparatus 10 that incorporates a fusion process to produce a glass ribbon 46 is depicted. The glass manufacturing apparatus 10 maybe part of a glass processing apparatus 100 (FIG. 4), as will be described in greater detail below, where a glass ribbon is formed, separated along edges and then rolled in a continuous process. The glass manufacturing apparatus 10 includes a melting vessel 14, a fining vessel 16, a mixing vessel 18 (e.g., a stir chamber), a delivery vessel 20 (e.g., a bowl), a forming apparatus 22 and a draw apparatus 24. The glass manufacturing apparatus 10 produces a continuous glass ribbon 46 from batch materials, first by melting and combining the batch materials into molten glass, distributing the molten glass into a preliminary shape, applying tension to the glass ribbon 46 to control the dimensions of the glass ribbon 46 as the glass cools and viscosity increases such that the glass ribbon 46 goes through a visco-elastic transition and has mechanical properties that give the glass ribbon 46 stable dimensional characteristics.

In operation, batch materials for forming glass are introduced into the melting vessel 14 as indicated by arrow 26 and are melted to form molten glass 28. The molten glass 28 flows into the fining vessel 16, wherein gas bubbles are removed from the molten glass. From the fining vessel 16, the molten glass 28 flows into the mixing vessel 18, where the molten glass 28 undergoes a mixing process to homogenize the molten glass 28. The molten glass 28 flows from the mixing vessel 18 to the delivery vessel 20, which delivers the molten glass 28 through a downcomer 30 to an inlet 32 and into the forming apparatus 22.

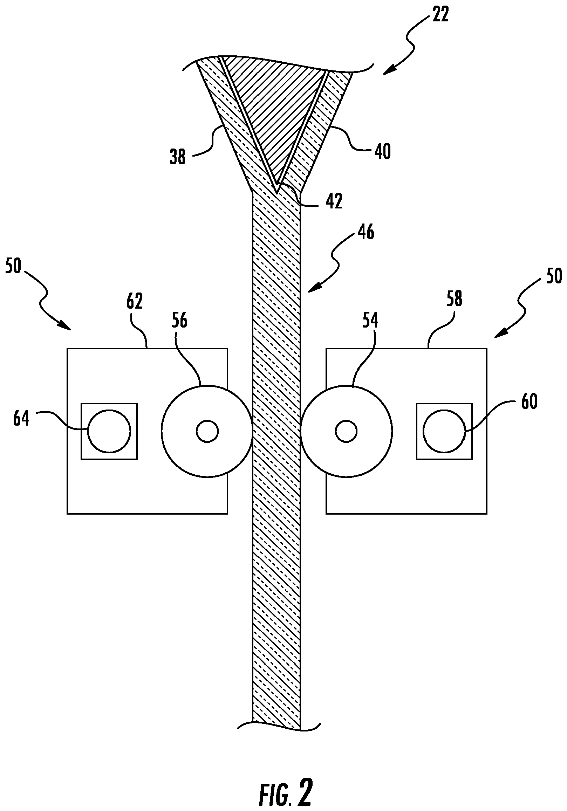

The forming apparatus 22 depicted in FIG. 1 is used in a fusion draw process to produce a flexible glass ribbon 46 that has high surface quality and low variation in thickness. The forming apparatus 22 includes an opening 34 that receives the molten glass 28. The molten glass 28 flows into a trough 36 and then overflows and runs down the sides of the trough 36 in two partial ribbon portions 38, 40 (see FIG. 2) before fusing together below the root 42 of the forming apparatus 22. The two partial ribbon portions 38, 40 of the still-molten glass 28 rejoin with one another (e.g., fuse) at locations below the root 42 of the forming apparatus 22, thereby forming a flexible glass ribbon 46 (also referred to as a glass ribbon or web). The flexible glass ribbon 46 is drawn downward from the forming apparatus by the draw apparatus 24. While the forming apparatus 22 is shown and described herein implements a fusion draw process, it should be understood that other forming apparatuses may be used including, without limitation, slot draw apparatuses for example.

As shown in FIGS. 1 and 2, the draw apparatus 24 may include a plurality of actively-driven stub roller pairs 50, 52, each of which include a front-side stub roller 54 and a rear-side stub roller 56. The front-side stub roller 54 is coupled to a front-side transmission 58, which is coupled to a front-side motor 60. The front-side transmission 58 modifies the output speed and torque of the front-side motor 60 that is delivered to the front-side stub roller 54. Similarly, the rear-side stub roller 56 is coupled to a rear-side transmission 62, which is coupled to a rear-side motor 64. The rear-side transmission 62 modifies the output speed and torque of the rear-side motor 64 that is delivered to the rear-side stub roller 56.

Operation of the plurality of stub roller pairs 50, 52 may be controlled by a global control device 70 (e.g., a programmable logic controller or PLC) for a variety of conditions including, for example and without limitation, torque applied to the flexible glass ribbon 46 and rate of rotation of the stub rollers 54, 56. The draw forces applied to the flexible glass ribbon 46 by the plurality of stub roller pairs 50, 52 while the flexible glass ribbon 46 is still in a visco-elastic state cause the flexible glass ribbon 46 to pull or stretch, thereby controlling the dimensions of the flexible glass ribbon 46 by controlling the tension applied to the flexible glass ribbon 46 in one or both the draw and cross-draw directions as the flexible glass ribbon 46 translates along the draw apparatus 24, while also imparting motion to the flexible glass ribbon 46.

The global control device 70 may include computer readable instructions stored in memory 72 and executed by a processor 74 that can determine, among other things, draw tension and speed of the flexible glass ribbon 46 provided by the stub roller pairs 50 and 52, for example, using any suitable sensors that provide feedback to the global control device 70. Further, the computer readable instructions can allow modification of parameters, such as torque and velocity of the stub roller pairs 50, 52 in light of feedback from the sensors. As one example, a stub roller 76 maybe provided that communicates with the global control device 70 to indicate rate of rotation. The rate of rotation of the stub roller 76 with the flexible glass ribbon 46 can be used by the global control device 70 to determine the extrinsic linear feed rate of the flexible glass ribbon 46 as the flexible glass ribbon 46 moves thereby.

As the flexible glass ribbon 46 is drawn through the draw apparatus 24, the glass has an opportunity to cool, whereupon stresses may be formed in the glass. The glass manufacturing apparatus 100 having the plurality of stub roller pairs 50, 52 may improve the control and consistency of the cross-draw tension and/or down-drawn tension in the area in which the glass ribbon 46 goes through a visco-elastic transformation. This area may be defined as the "setting zone" in which the stress and flatness are set into the glass ribbon 46. Glass manufacturing apparatus 100 that includes the plurality of actively driven stub roller pairs 50, 52 may provide improvements in the manufacturing of flexible glass ribbon 46 as compared to conventionally designed manufacturing apparatus that incorporate rollers that extend along the entire width of the flexible glass ribbon 46. However, in certain situations, manufacturing apparatus that utilize rollers that extend along the entire width of the flexible glass ribbon 46 may be used.

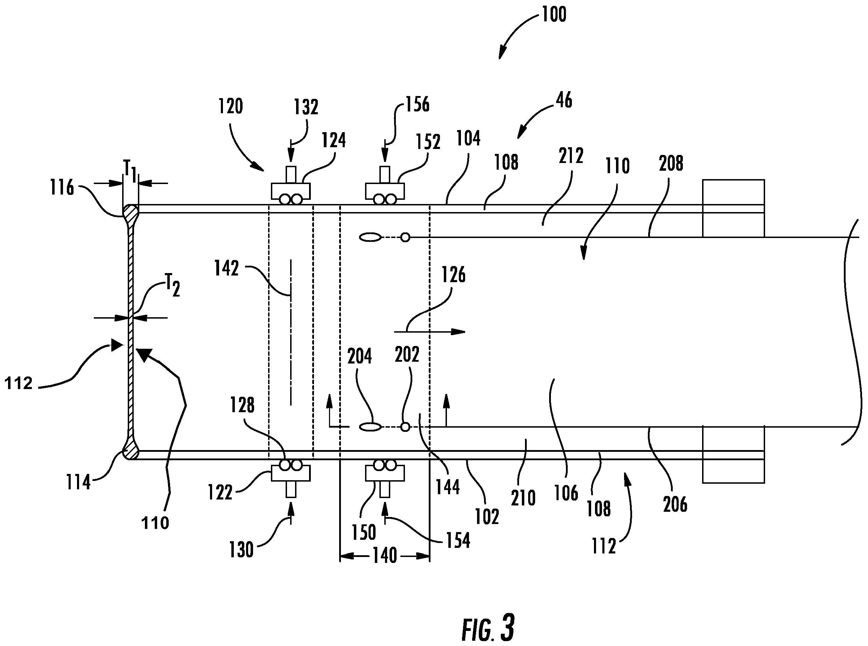

The global control device 70 may use the draw apparatus 24 to set a global master speed for the glass processing apparatus 100 (FIG. 4), while also shaping the flexible glass ribbon 46. Referring to FIG. 3, as noted above, the glass manufacturing system 10 maybe part of the glass processing apparatus 100. The flexible glass ribbon 46 is illustrated being conveyed through the glass processing apparatus 100, another portion of which is illustrated by FIG. 3. The flexible glass ribbon 46 may be conveyed in a continuous fashion from the glass manufacturing system 10 (FIG. 1) through the glass processing apparatus 100. The flexible glass ribbon 46 includes a pair of opposed first and second edges 102 and 104 that extend along a length of the flexible glass ribbon 46 and a central portion 106 that spans between the first and second edges 102 and 104. In some embodiments, the first and second edges 102 and 104 may be covered in a pressure sensitive adhesive tape 108 that is used to protect and shield the first and second edges 102 and 104 from contact. The tape 108 may be applied to one or both of the first and second edges 102 and 104 as the flexible glass ribbon 46 moves through the apparatus 100. In other embodiments, the adhesive tape 108 may not be used or the adhesive tape 108 may be applied after the edge beads are removed. A first broad surface 110 and an opposite, second broad surface 112 also spans between the first and second edges 102 and 104, forming part of the central portion 106.

In embodiments where the flexible glass ribbon 46 is formed using a down draw fusion process, the first and second edges 102 and 104 may include beads 114 and 116 with a thickness T₁ that is greater than a thickness T₂ within the central portion 106. The central portion 106 may be "ultra-thin" having a thickness T₂ of about 0.35 mm or less including but not limited to thicknesses of, for example, about 0.01-0.05 mm, about 0.05-0.1 mm, about 0.1-0.15 mm and about 0.15-0.35 mm, although flexible glass ribbons 46 with other thicknesses may be formed in other examples.

The flexible glass ribbon 46 is transported through the apparatus 100 using a ribbon conveyance system 120 that is controlled by the global control device 70. Lateral guides 122 and 124 may be provided to orient the flexible glass ribbon 46 in the correct lateral position relative to the machine or travel direction 126 of the flexible glass ribbon 46. For example, as schematically shown, the lateral guides 122 and 124 may include rollers 128 that engage the first and second edges 102 and 104. Opposed forces 130 and 132 may be applied to the first and second edges 102 and 104 using the lateral guides 122 and 124 that help to shift and align the flexible glass ribbon 46 in the desired lateral orientation in the travel direction 126.

The glass processing apparatus 100 can further include a cutting zone 140 downstream from a bend axis 142 about which the flexible glass ribbon 46 may be bent. In one example, the apparatus 100 may include a cutting support member configured to bend the flexible glass ribbon 46 in the cutting zone 140 to provide a bent target segment 144 with a bent orientation. Bending the target segment 144 within the cutting zone 140 can help maximize conformance of the flexible glass ribbon 46 to the support thereby minimizing mechanical stresses of the flexible glass ribbon 46 during the cutting procedure. Such bending of the flexible glass ribbon 46 to the support can help prevent buckling or disturbing the flexible glass ribbon profile during the procedure of separating at least one of the first and second edges 102 and 104 from the central portion 106 of the flexible glass ribbon 46.

Providing the bent target segment 144 in the cutting zone 140 can increase the cross-direction rigidity of the flexible glass ribbon 46 throughout the cutting zone 140. As such, as shown in FIG. 3, optional lateral guides 150, 152 can engage the flexible glass ribbon 46 in a bent condition within the cutting zone 140. With increased cross-web stiffness, forces 154 and 156 applied by the lateral guides 150 and 152 are therefore less likely to buckle or otherwise disturb the stability of the glass ribbon profile when laterally aligning as the flexible glass ribbon 46 passes through the cutting zone 140.

As set forth above, providing the bent target segment 144 in a bent orientation within the cutting zone 140 can help maximize web conformance to the support thereby assisting in minimizing mechanical stress in the flexible glass ribbon 46 during the cutting procedure. Such conformation can help prevent buckling or disturbing the glass ribbon profile during the procedure of separating at least one of the first and second edges 102 and 104. Moreover, the bent orientation of the bent target segment 144 can increase the rigidity of the bent target segment 144 to allow optional fine tune adjustment of the lateral orientation of the bent target segment 144. As such, the flexible glass ribbon 46 can be effectively properly laterally oriented without contacting the first and second broad surfaces of the central portion 106 during the procedure of separating at least one of the first and second edges 102 and 104.

The apparatus 100 can further include a wide range of edge trimming apparatus configured to separate the first and second edges 102 and 104 from the central portion 106 of the flexible glass ribbon 46 in a continuous fashion. In one example, as shown in FIG. 4, one example edge trimming apparatus 170 can include an optical delivery apparatus 172 for irradiating and therefore heating a portion of the upwardly facing surface of the bent target segment 144. In one example, optical delivery apparatus 172 can comprise a cutting device such as the illustrated laser 174 although other radiation sources may be provided in further examples. The optical delivery apparatus 172 can further include a circular polarizer 176, a beam expander 178, and a beam shaping apparatus 180.

The optical delivery apparatus 172 may further comprise optical elements for redirecting a beam of radiation (e.g., laser beam 182) from the radiation source (e.g., laser 174), such as mirrors 184, 186 and 188. The radiation source can comprise the illustrated laser 174 configured to emit a laser beam having a wavelength and a power suitable for heating the flexible glass ribbon 46 at a location where the beam is incident on the flexible glass ribbon 46. In one embodiment, laser 174 can comprise a CO₂ laser although other laser types may be used in further examples.

As further shown in FIG. 4, the example edge trimming apparatus 170 can also include a coolant fluid delivery apparatus 192 configured to cool the heated portion of the upwardly facing surface of the bent target segment 144. The coolant fluid delivery apparatus 192 can comprise a coolant nozzle 194, a coolant source 196 and an associated conduit 198 that may convey coolant to the coolant nozzle 194.

In one example, a coolant jet 200 comprises water, but may be any suitable cooling fluid (e.g., liquid jet, gas jet or a combination thereof) that does not stain, contaminate or damage the upwardly facing surface of the bent target segment 144 of the flexible glass ribbon 46. The coolant jet 200 can be delivered to a surface of the flexible glass ribbon 46 to form a cooling zone 202. As shown, the cooling zone 202 can trail behind a radiation zone 204 to propagate an initial crack (FIG. 3).

The combination of heating and cooling with the optical delivery apparatus 172 and the coolant fluid delivery apparatus 192 can effectively separate the first and second edges 102 and 104 from the central portion 106 while minimizing or eliminating undesired residual stress, microcracks or other irregularities in the opposed edges 206, 208 of the central portion 106 that may be formed by other separating techniques. Moreover, due to the bent orientation of the bent target segment 144 within the cutting zone 140, the flexible glass ribbon 46 can be positioned and stabilized to facilitate precise separating of the first and second edges 102 and 104 during the separating process, thereby assisting in minimizing some forms of mechanically induced stresses. Still further, due to the convex surface topography of the upwardly facing convex support surface, the continuous strips of edge trim 210 and 212 can immediately travel away from the central portion 106, thereby reducing the probability that the first and second edges 102 and 104 will subsequently engage (and therefore damage) the first and second broad surfaces and/or the high quality opposed edges 206, 208 of the central portion 106. The central portion 106 may then be wound into a roll 270 using a winding apparatus. In some embodiments, instead of being wound onto a roll, the edge trim 210, 212 may be conveyed to an appropriate area (for example a cullet chute) for disposal.

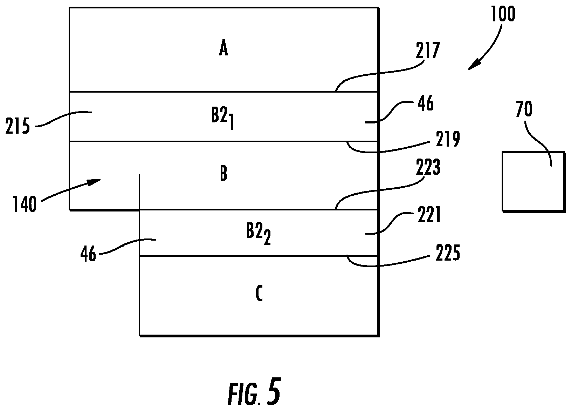

Referring to FIG. 5, as can be appreciated, the various processes (e.g., forming, edge separating and rolling) may introduce instabilities, perturbations, vibrations, and transient effects to the flexible glass ribbon 46 as the flexible glass ribbon 46 travels through the glass processing apparatus 100. To reduce the upstream and/or downstream impact of any instabilities, perturbations, vibrations, and transient effects (including mechanically induced stresses that may adversely affect the propagation of the crack tip), the glass processing apparatus may be divided into a number of mechanically isolated processing zones, each zone corresponding to one or more different processes. In the illustrated example shown schematically, processing zone A includes a flexible glass ribbon forming process, processing zone B includes a flexible glass ribbon cutting process (the cutting zone 140) and processing zone C includes a flexible glass ribbon winding process, where the processes within the processing zones may be similar to any of the processes described above. For example, the ribbon forming process may include the above-described ribbon drawing processes, or may include a float forming process.

A buffer zone B2₁ may be provided between processing zone A and processing zone B for process isolation between the processing zones A and B. Within the buffer zone B2₁, the flexible glass ribbon 46 may be held in a free loop 215 and may hang in a catenary between entrance and exit positions 217 and 219, respectively. For example, positions 217 and 219 maybe from about 1.5 meters to about 7.5 meters apart to allow use of a number of cullet chutes, and/or loop out mitigation devices, for example. Between these two positions 217, 219, the flexible glass ribbon 46 is not pulled tight, but hangs under its own weight. For example, the tension in the flexible glass ribbon 46 is determined by the weight of the flexible glass ribbon 46 and can be no more than about 0.02 N/mm (about 0.1 pound per linear inch ("pli")), such as from about 0.002 N/mm to about 0.02 N/mm (0.01 pli to about 0.1 pli) within the free loop B2₁.

The free loop shape can self-adjust depending on the amount of pull force and gravitational force within the buffer zone. The free loop 215 can accommodate more or less flexible glass ribbon 46 by adjusting the free loop shape. The buffer zone B2₁ can serve as an accumulator of error between processing zones A and B. The buffer zone B2₁ can accommodate errors such as path length differences due to velocity, twist or shape variance due to strain mismatch and machine misalignment errors. In some embodiments, a loop sensor 247 (see FIG. 4), such as an ultrasonic or optical sensor, may be provided to maintain a preselected loop height. In some embodiments, a tension sensor (e.g., a strain gauge) may be provided to measure tension within the flexible glass ribbon 46. In some embodiments, driving rollers providing the positions 217, 219 may have an in-line torque transducer used to measure tension within the flexible glass ribbon 46. The sensors may provide real-time information to the global control device 70, which can adjust the speed and/or tension of the driven rollers based on the information.

Another buffer zone B2₂ may be provided between processing zone B and processing zone C for process isolation between the processing zones B and C. Within the buffer zone B2₂, the flexible glass ribbon 46 may be held in a free loop 221 and may hang in a catenary between entrance and exit positions 223 and 225. For example, positions 223 and 225 may be from about four meters to about 12 meters apart to allow use of a number of cullet chutes, and/or loop out mitigation devices, for example. Between these two positions 223 and 225, the flexible glass ribbon 46 is not pulled tight, but hangs under its own weight. For example, the tension in the flexible glass ribbon 46 is determined by weight of the flexible glass ribbon 46 and can be no more than about 0.02 N/mm (about 0.1 pli), such as from about 0.002 N/mm to about 0.02 N/mm (0.01 pli to about 0.1 pli) within the free loop 221.

The free loop 221 shape can self-adjust depending on the amount of pull force and gravitational force within the buffer zone B2₂. The free loop 221 can accommodate more or less flexible glass ribbon 46 by adjusting the free loop shape. The buffer zone B2₂ can serve as an accumulator of error between processing zones B and C. The buffer zone B2₂ can accommodate errors such as path length differences due to velocity, twist or shape variance due to strain mismatch and machine misalignment errors. In some embodiments, a loop sensor 266 (see FIG. 4), such as an ultrasonic or optical sensor, may be provided to maintain a preselected loop height. In some embodiments, a tension sensor (e.g., a strain gauge) may be provided to measure tension within the flexible glass ribbon 46. The sensors may provide real-time information to the global control device 70, which can adjust the speed and/or tension of driven rollers providing the entrance and exit positions based on the information.

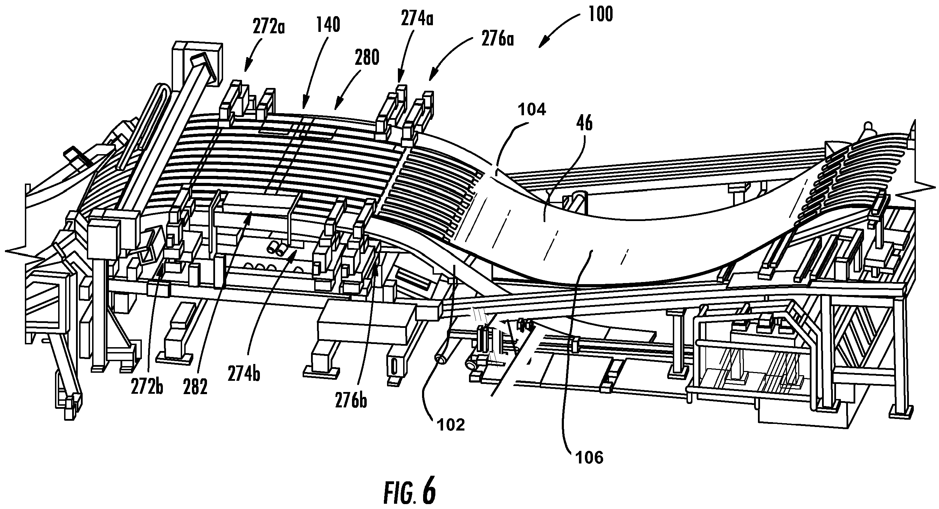

Referring to FIG. 6, within the cutting zone 140, drive roller pairs 272a 272b, 274a 274b, and 276a 276b (e.g., pinch drive rollers) maybe used for tension and position control for the flexible glass ribbon 46. As one example, drive roller pair 272a, 272b may be located upstream of the cutting zone 140 and drive roller pairs 274a, 274b and 276a, 276b may be located downstream of the cutting zone 140. In some embodiments, drive roller pairs 274a, 274b engage the edges 102, 104 of the glass ribbon, whereas drive roller pairs 276a, 276b engage the central portion 106 of the glass ribbon. The global control device 70 (FIG. 1) may control operation of the drive roller pairs 272a, 272b, 274a, 274b, and 276a, 276b, to control speed, tension and position of the flexible glass ribbon 46 through the cutting zone 140. Stabilization devices other than drive rollers may be used, such as a belt system or other type of roller system.

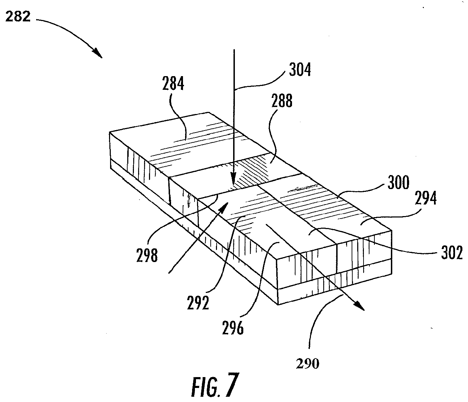

High stiffness air bearing assemblies 280 and 282 (one of which, 282, is shown close-up in FIG. 7 as an example but the other will have a similar structure), may be provided at opposite sides of the cutting zone 140 to stabilize the flexible glass ribbon 46, as it travels in the direction of arrow 290, damping mechanical disturbances that would otherwise cause stress variation at the crack tip. As used herein, the term "high stiffness air bearing" refers to air bearings having a stiffness of at least about 0.01 MPa/mm, such as from about 0.01 MPa/mm to about 0.1 MPa/mm. Referring to FIG. 7, the air bearing assemblies 280 and 282 may be of any suitable dimension (e.g., 8 inches by 24 inches with 4 inches on each side of the crack tip and 12 inches upstream and downstream of the crack tip) and may be formed of multiple air bearings 284, 288, 292 and 294 that are collectively used to generate high pressure areas, preloaded by a vacuum to create high stiffness points which can vertically stabilize the flexible glass ribbon dynamics even at relatively high air gaps and low air consumption. The air bearings 292 and 294 have geometries that facilitate removal of the first and second edges 102 and 104 of the flexible glass ribbon 46 from the central portion 106. In the embodiment of bearing assembly 282, the air bearing 292 has a ramped top surface 296 that can be flush at an upstream end 298 with a top surface 300 of air bearing 294, and has a downstream end 302 that extends below the top surface 300 thereby providing a conveyance path for the cut edge 102 as the cut edge diverges downward from the central portion 106. In the embodiment of bearing assembly 280, the air bearing 294 has a ramped top surface 300 that can be flush at an upstream end 298 with a top surface 296 of air bearing 292, and has a downstream end that extends below the top surface 296 thereby providing a conveyance path for the cut edge 104 as the cut edge diverges downward from the central portion 106. The downward divergence of the cut edges 102, 104 occurs within a distance of no more than about 4 inches (10 cm), such as no more than about 2 inches (5 cm), downstream from the laser beam represented by arrow 304). In some embodiments, the distance from the crack tip that the cut edges 102 and 104 diverge downwardly from the central portion 106 may be fine-tuned by adjusting gas pressure of the air bearings 292 and 294. Local pinch roller systems and/or belt systems may be used to minimize mechanical disturbances of the flexible glass ribbon 46 at the cutting zone that cause mechanical stress variation. Although explained as diverging downwardly, instead, the bearing assemblies 280, 282 (including the ramped surfaces of the air bearings 292 and 294 maybe configured to diverge the cut edges 102, 104 upwardly away from the plan of travel of the central portion 106.

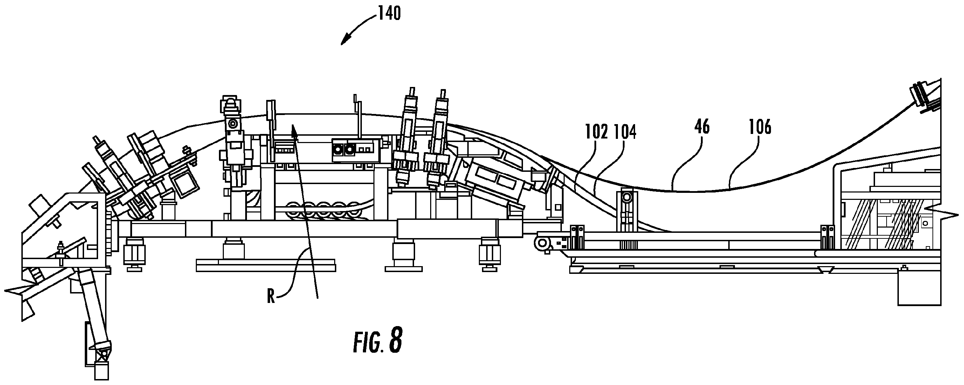

Referring now to FIGS. 8-11, it has been discovered that providing a non-flat, convex conveyance path for the flexible glass ribbon 46 in the cutting zone 140 may be desirable, particularly for ultra-thin glass webs. It has also been found that a particular configuration of the conveyance path is desirable for reducing mechanically induced stresses at a crack tip, thereby allowing thermally induced stresses to propagate the crack in a controlled manner resulting in edges having desirable strength.

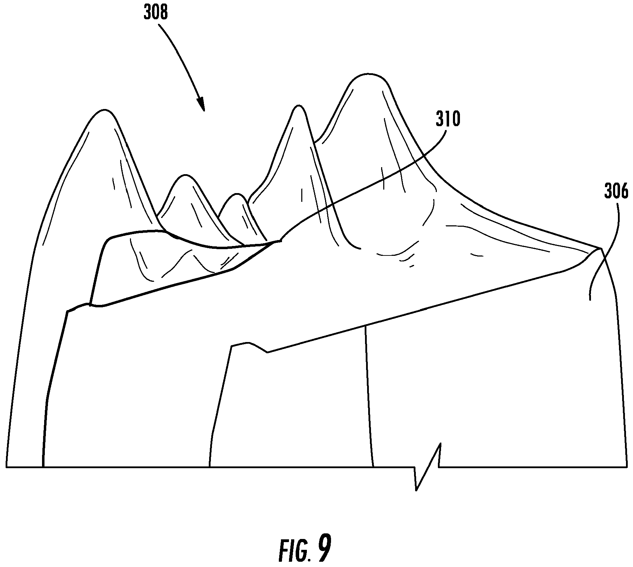

Referring to FIG. 9, there is an exaggerated illustration showing what happens to the shape of a flexible glass web 306 as it is conveyed along a flat conveyance path through a cutting zone 308. As noted above, residual stresses may be built up within the glass web 306 from when it is formed. Some of these residual stresses are released when a crack is propagated through the glass web to separate it into two portions. As the residual stresses are released, they will tend to cause the glass web to buckle and take on other non-planar configurations as schematically illustrated in FIG. 9. Alternatively, or in addition, trying to flatten a glass web that has some non-planar shape may similarly induce mechanical deformation leading to stress upon severing the glass ribbon into two portions. In either case, the flat support does not constrain the glass web, as the residual stresses are released, whereby portions of the glass web take on an uncontrolled configuration that induces stress at the crack tip from the mechanical movement of the portions of the web. And these mechanically induced stresses at the crack tip 310 can reduce the robustness of the crack propagation and edge quality. Accordingly, it is beneficial to include a support having some curvature in order to induce some stiffness in the glass ribbon. The stiffness induced by the curvature assists in resisting the uncontrolled change in shape that can lead to mechanically induced stresses at the crack tip. In general, the smaller the radius of curvature of the support, the more stiffness that will be induced, and the better the ability of the ribbon to resist shape change, for example that coming from the release of residual stress as the glass is sep arated.

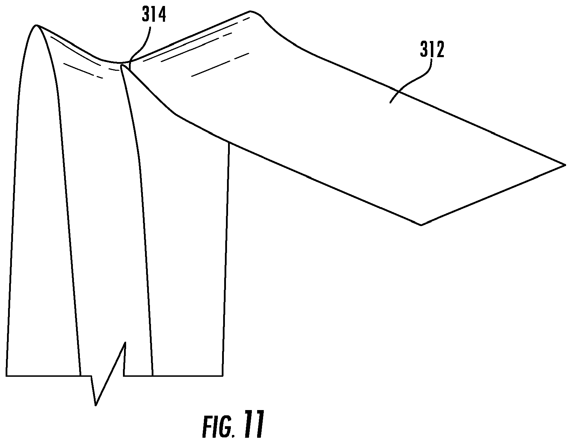

On the other hand, however, bending the glass ribbon at too tight a radius also has adverse effects, particularly when separating a bead portion from the quality area of the glass ribbon due to the difference in stiffnesses of each portion. More specifically, the bead portion has a much greater thickness (and thus stiffness) than does the quality area of the glass ribbon. Accordingly, when the thicker bead portion is separated from the thinner quality portion and the separation point is located on a support having too tight a radius of curvature, the thicker (stiffer) bead portion wants to straighten (due to its stiffness) to a larger radius of curvature. This mechanical movement of the bead portion, toward a larger radius of curvature, can induce stress back at the crack tip 314. Because the bead portion is typically not uniform along its entire length (due to variations in knurl caused by the rollers pulling the glass ribbon as it is formed), the amount of difference in stiffness is largely unpredictable whereby it is difficult to be able to compensate for the differences in stiffness when attempting to control the separated bead from moving to a larger radius. For example, FIG. 11 illustrates, in an exaggerated manner, a modeled bead roll displacement effect of a flexible glass ribbon 312 (having an exemplary thickness profile, e.g., 200 microns, and no residual stress from the initial forming) due to bending over a radius of curvature of 72 inches, whereby the mechanical movement of the bead portion increases stresses generated at the crack tip 314, which can disturb the desired thermally induced stresses of the laser used to propagate the crack tip. And lower edge strength results when the thermally induced stresses are disturbed. Accordingly, to minimize the stress at the crack tip due to the bead stiffness affects, the radius of curvature of the support cannot be too small.

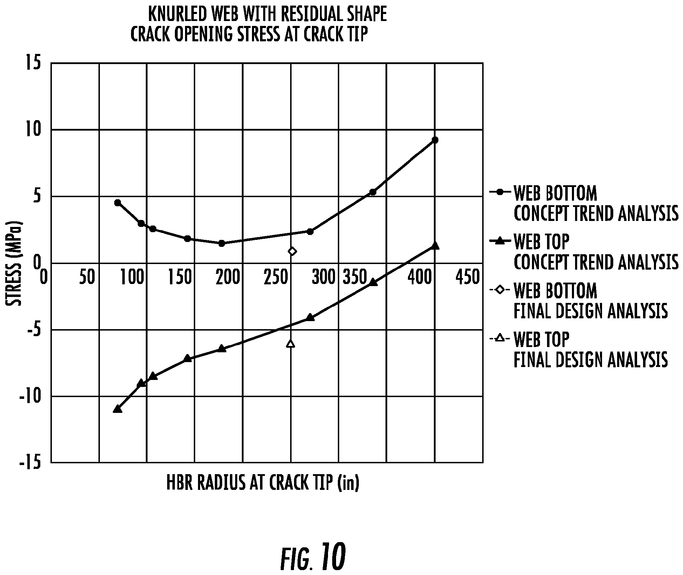

FIG. 10 illustrates an exemplary plot of modeled stress (opening stress at the crack tip, i.e., a Mode I crack separation mode in fracture mechanics, wherein the opening mode includes a tensile stress normal to the plane of the crack) on the Y axis versus radius of curvature R on the X axis for a flexible glass ribbon (having a 200 micron thickness) at the crack tip in the cutting zone. This graph shows the resultant mechanically-induced stress from the competing effects illustrated in connection with FIG. 9 (residual stress) and FIG. 11 (web, particularly bead, stiffness). As can be seen, the web top and web bottom stresses at the crack tip are considerably lower at a radius of curvature R of 250 inches (e.g., less than 2.5 MPa in tension at the top surface and less than 7.5 MPa in compression at the bottom surface, as shown by the open triangular and open diamond points, respectively) compared to, for example, a radius of curvature R of 72 inches. As the radius of curvature gets smaller, from a starting point at 250 inches, the stress tends to increase (see the solid triangular and solid circular data points of the "concept trend analysis" lines in FIG. 10) as a result of greater effects from the bead wanting to straighten out after separation from the remaining portion of the web (because of the greater stiffness of the bead as compared to that of the remaining portion of the web, as discussed in connection with FIG. 11). On the other hand, as the radius of curvature of the support gets larger, from a starting point at 250 inches, the stress tends to increase as a result of greater effects from uncontrolled bending from the release of residual stress (as discussed in connection with FIG. 9). Thus, there is an advantageous radius of curvature R at and around 250 inches. Although the above discussion is in connection with a 200 micron thick central portion, the results are similar for a 100 micron thick central web portion, i.e., the stresses induced at a radius of 250 inches were lower than those for the 200 micron thick central portion.

Referring back to FIG. 8, the conveyance path is provided with a radius of curvature R over a preselected distance. For example, a radius of curvature R of more than about 72 inches (183 cm), for example at least about 100 inches (254 cm), for example at least about 150 inches (391 cm), such as at least about 200 inches (508 cm), such as 250 inches (635 cm) or more may be provided. In some embodiments, the radius of curvature R may be from about 100 inches to about 400 inches (from about 254 cm to about 1016 cm), for example from about 200 to 300 inches (from about 508 cm to about 762 cm), for example about 250 inches (about 635 cm).

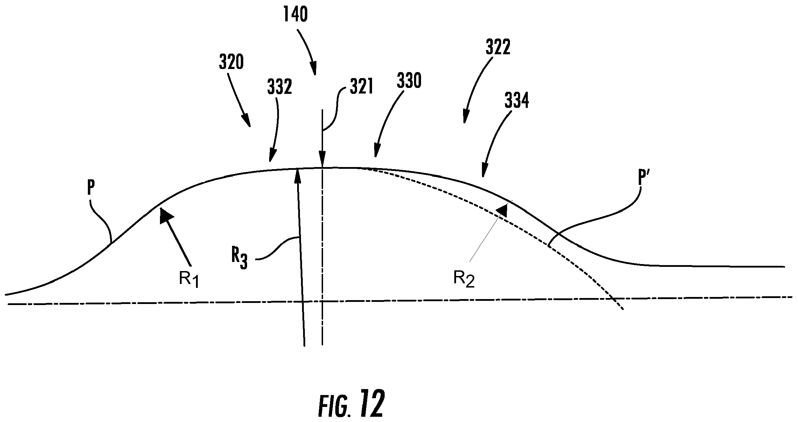

Referring to FIG. 12, a diagrammatic illustration of a conveyance path P for the flexible glass ribbon is illustrated. The laser beam and crack tip position are represented by arrow 321. In this illustrative example, the conveyance path P may include an upstream portion 320 that is upstream of the cutting zone 140 and a downstream portion 322 that is downstream of the cutting zone 140. In some embodiments, the radius of curvature R₁ of the upstream portion 320 is the same as the radius of curvature R₂ of the downstream portion 322. In other embodiments, their respective radius of curvature R₁, R₂ may be different. The radius of curvature R₃ of the cutting zone 140 may be different from and greater than the radius of curvature R₁ of the upstream portion 320 and the radius of curvature R₂ of the downstream portion 322. As one example, the radius of curvature R₁ and R₂ may be at least about 72 inches (about 183 cm) and the radius of curvature R₃ may be from about 200 to about 300 inches (from about 508 to about 762 cm), such as about 250 inches (about 635 cm).

As indicated above, the conveyance path P of the central portion 106 of the flexible glass ribbon 46 may be different from a conveyance path P' of the beaded edges 102 and 104 (shown by the broken line) separated from the central portion 106 (see, also, FIG. 8). For example, the conveyance path P of the central portion 106 may include a flat portion 330 having an infinite radius of curvature (located after the portion having radius R₃), while the conveyance path P' of the edges 102 and 104 may not include such a flat portion. In some embodiments, for example, the conveyance path P may include the upstream portion 320 having the radius of curvature R₁, the cutting zone 140 having the radius of curvature R₃, the flat portion 330 (which may be about 4 inches in length, about 10 cm in length, as measured along the travel direction from the end of upstream portion 320 to the start of the downstream portion 322) and the downstream portion 322 having radius of curvature R₂. The conveyance path P' may include an upstream portion 332 that follows the upstream portion 320 of the conveyance path P into the cutting zone 140 since there has not yet been any separation of the edges 102 and 104 from the central portion 106. Once the edges 102 and/or 104 are separated from the central portion 106, the conveyance path P' may not include a flat portion and, thus, may diverge from the conveyance path P along a downstream portion 334 of the conveyance path P', even though it may have the same radius, e.g., radius R₂, as the downstream portion 322 of the conveyance path P. That is, the flat portion 330 may be used to shift the path P relative to the path P', whereby the separated edges of the central portion 106 and the edges 102, 104, do not disadvantageously rub against one another as rubbing is likely to lead to damage.

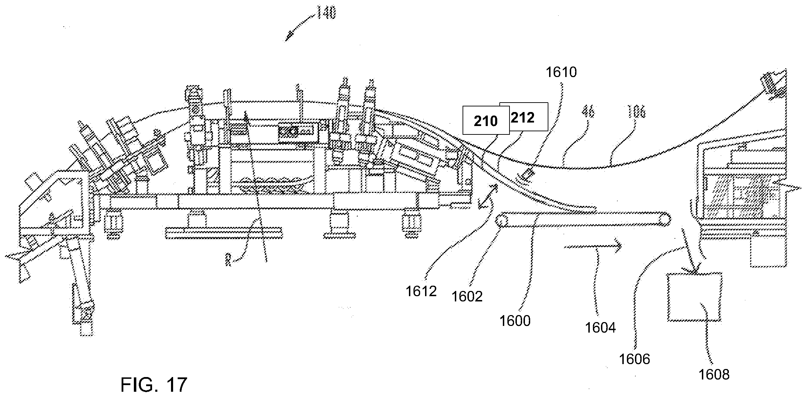

In some embodiments, the edge trim 210, 212 maybe manipulated in additional or alternative manners (with respect to those described above) to reduce disadvantageous rubbing against the central portion 106. Referring to FIG. 17, in some embodiments, the edge trim 210, 212 is guided onto a belt conveyor having a belt 1600 disposed around rollers 1602, 1604. One or more of the rollers 1602, 1604 may be driven by a motor (not shown) to move the top portion of the belt 1600 in the direction of arrow 1604. The belt 1600 supports and guides the edge trim 210, 212 until it passes, in the direction of arrow 1606, into cullet chute 1608 for disposal. The speed at which the belt 1600 is driven, with respect to the speed at which the glass ribbon 46 is moving, can manipulate the position of the edge trim along the direction of arrow 1612. For example, if the belt 1600 is moving slower than is the glass ribbon 46, then the edge trim 210, 212 will tend to move downward and to the left as orientation is shown in FIG. 17. On the other hand, if the belt 1600 is moving faster than is the glass ribbon 46, then the edge trim 210, 212 will tend to move upward and to the right as orientation is shown in FIG. 17. In this manner, there can be manipulated the vertical position of the edge trim with respect to the position of the central portion 106 to avoid rubbing between the edge trim 210, 212 and the high quality opposed edges 206, 208, which rubbing may lead to damage of the edges 206, 208 and/or particulate that may be disadvantageously deposited onto the surface of the central portion 106 of the glass ribbon. A sensor 1610 maybe used to monitor the position of the edge trim 210, 212, and feed that position back to a controller that may then adjust the moving speed of the belt 1600 as desired.

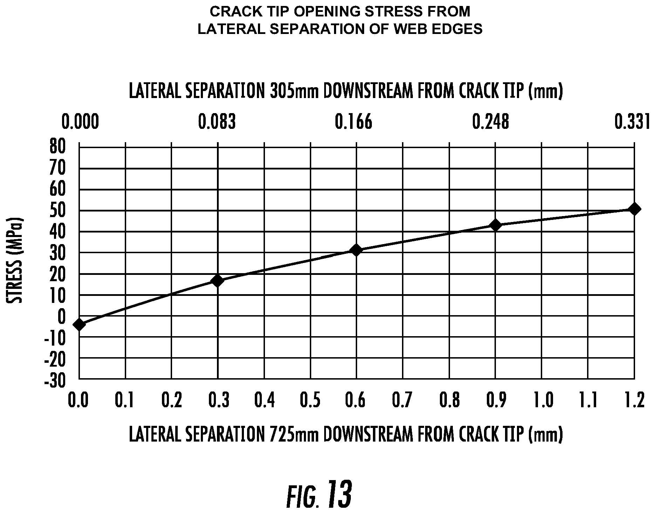

FIG. 13 illustrates an exemplary graph of modeled stress (opening stress at the crack tip, i.e., a Mode I crack separation mode in fracture mechanics, wherein the opening mode includes a tensile stress normal to the plane of the crack) on the Y axis versus lateral separation distance (in mm) of the web edges 102, 104, from the central portion 106 of the glass ribbon on the X axis. The top X axis is scaled for separation distance at a position that is 305 mm downstream from the crack tip, whereas the bottom X axis is scaled for lateral separation distance at a position that is 725 mm downstream from the crack tip. The data points on the curve correspond to the same events on each of the X axis scales. That is, a lateral separation distance of 0.331 mm at a position of 305 mm downstream of the crack tip corresponds to a separation distance of 1.2 mm at a position of 725 mm downstream of the crack tip, both of which correspond to a stress of 50MPa at the crack tip. A comparison of this graph with that in FIG. 10 shows that the stress from laterally moving the edges 102, 104 away from the central portion 106 can quickly dwarf the stresses induced by the curvature of the support, although both stresses should be controlled to provide the best possible conditions for controlled propagation of the crack tip. By way of example, the stress induced by moving the edges 102, 104 a distance of 0.331 mm at a position 305 mm downstream from the crack tip produces a stress of 50 MPa at the crack tip. And this stress of 50 MPa is five to ten times greater than that produced by the support curvature as shown in FIG. 10. Accordingly, it is important to control the lateral separation of the edges so they do not move too far away from the central portion 106. On the other hand, if there is not enough separation, then the edges will rub against one another causing damage. The positions of the edges 102, 104 relative to the central portion 106 may be suitably controlled by, for example, the drive roller pairs as discussed above. According to one embodiment, the lateral separation at a point 725 mm downstream of the crack tip can advantageously be controlled to be 0.2 mm or less in order to keep the stresses from lateral separation on the same order as those from the ribbon stiffness and residual stresses as discussed in connection with FIGS. 9-11, and on the same order as those from web overhang distance as discussed below. The plot in FIG. 13 was generated with a central portion thickness of 200 microns. When the central web portion has a thickness of 100 microns, the stresses are similar or less than those for the 200 thick configuration.

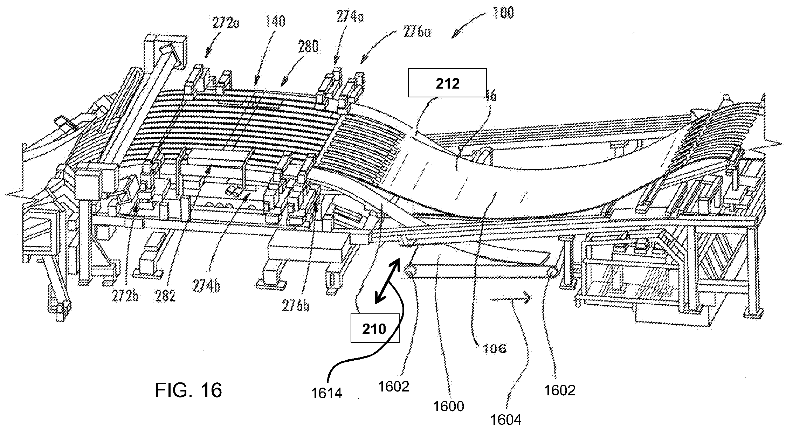

In some embodiments, the lateral (horizontal) positions of the edges 102, 104 (and/or the edge trim 210, 212) relative to the central portion 106 may be controlled by controlling the position of the edge trim 210, 212 on belt 1600. Referring to FIG. 16, the belt 1600 supports the edge trim 201, 212 after it has been severed from the central portion 106 and prior to disposal through the cullet chute 1608 as described above in connection with FIG. 17. The belt 1600 engages, and holds by friction force, the edge trim 210, 212. Because of the frictional engagement between the belt 1600 and the edge trim 210, 212, once the edge trim has contacted the belt, there is fixed the horizontal position of the edge trim 210, 212 relative to the central portion 106. Accordingly, by manipulating the position of the edge trim 210, 212 in the direction of arrow 1614 prior to contact with the belt 1600, there can be adjusted and controlled the lateral separation of the edges so as to be at an appropriate position relative to the central portion 106. More specifically, by moving the edge trim 210 in a direction upward and to the right as orientation is shown in FIG. 16, the lateral position of edge trim 210 relative to central portion 106 is adjusted so as to produce a smaller separation. On the other hand, by moving the edge trim 210 in a direction downward and to the left as orientation is shown in FIG. 16, the lateral position of the edge trim 210 relative to the central portion 106 is adjusted so as to produce a larger separation. Once the edge trim 210, 212 contacts and is supported by belt 1600, the frictional forces between the edge trim 210, 212 and the belt 1600 will hold the desired lateral separation. In some embodiments, this manner of controlling the lateral separation is advantageous, particularly when the thickness of the glass ribbon makes it hard to control with the drive roller pairs, i.e., when the glass ribbon lacks sufficient stiffness because it is so thin, for example 100 microns or less.

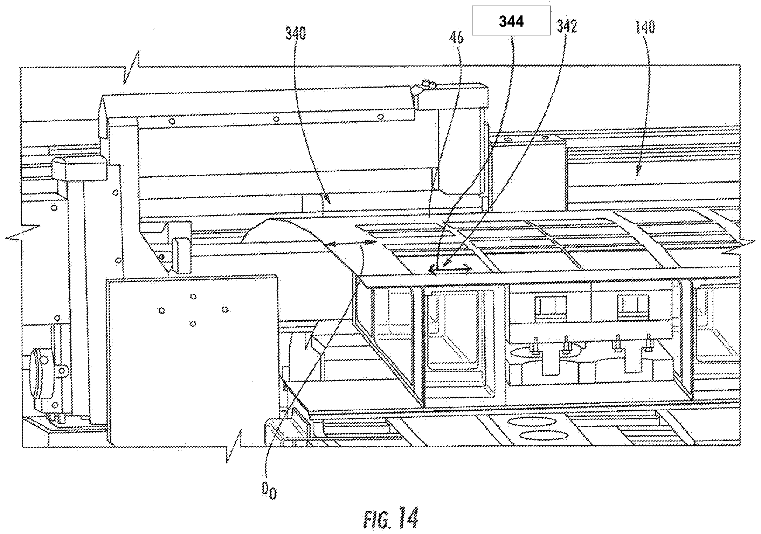

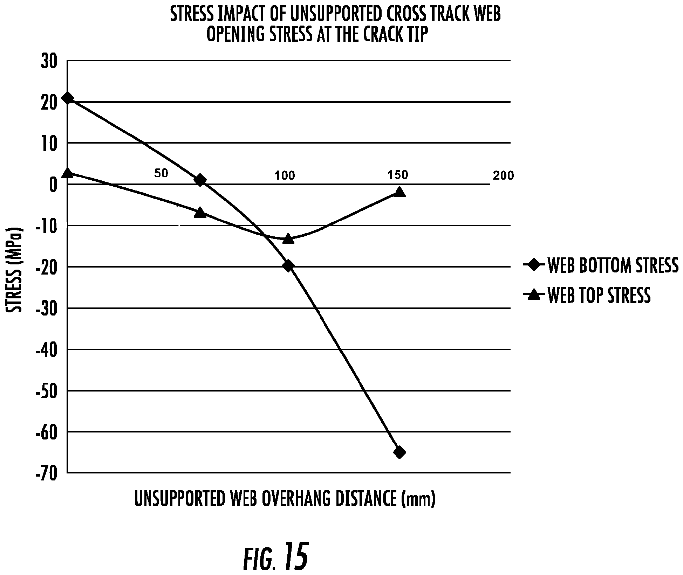

Referring to FIG. 14, in addition to providing a non-flat, convex conveyance path, for the flexible glass ribbon 46 in the cutting zone 140, and to controlling the lateral separation of the edges from the central portion of the glass ribbon, it may also be desirable to provide the flexible glass ribbon 46 with an overhang portion 340. The overhang portion 340 is a portion that overhangs an outermost edge of air bearing 342 in the cutting zone 140 by a distance Dₒ. The air bearing 342 may be an air bearing assembly similar to either 280 or 282 as described above in connection with FIGS. 6 and 7. In some embodiments, the air bearing 342 includes an outer section that is movable in the direction of arrow 344. Thus, the distance Dₒ can be adjusted by moving the position of the outer section of the air bearing. Similar to that noted above with respect to controlling the position of the edge trim 210, 212 relative to the belt 1600, this manner of controlling the lateral separation is advantageous, particularly when the thickness of the glass ribbon makes it hard to control with the drive roller pairs, i.e., when the glass ribbon lacks sufficient stiffness because it is so thin, for example 100 microns or less. FIG. 15 illustrates mechanically-induced stresses at upper and lower surfaces of the flexible glass ribbon versus overhang distance. As can be seen, the overall mechanically induced stress (top and bottom stress combined) tends to decrease (becomes more compressive, as opposed to tensile, but increases in magnitude) with increasing overhang distance from zero overhang distance, increasing relatively rapidly after about 2 inches (about 5 cm or 50 mm). Also, at zero overhang distance Dₒ, it is seen that although the web top stress is near zero, the web bottom stress is 20 MPa (tensile). Not wishing to be bound by theory, the bottom portion of the web may be placed in tension by action of the thicker bead portion being supported and pushed up relative to the thinner central portion of the glass web. Accordingly, when separating a beaded portion from the remaining web, it is advantageous to have a non-zero overhang distance Dₒ . When separating two portions from the central portion of the ribbon, or in other cases where there is no beaded portion on the edge of the web, overhang distance Dₒ becomes less important. However, when the beaded portion is present at the edge of the web, at an overhang distance Dₒ of around 2 inches (5 cm or 50 mm) there is a point where the mechanically induced stresses (combined top and bottom) are minimized. For example, with a 2 inch (5 cm) overhang distance, the top surface at the crack tip of the flexible glass ribbon may have a tensile stress of less than about 5 MPa, while the bottom surface may have a compressive stress of less than about 10 MPa. Referring back to FIG. 14, accordingly, overhang distances of less than about 6 inches (about 15 cm), such as from about 1 to about 3 inches (about 2.5 to about 7.5 cm, about 25 to 75 mm), such as about 2 inches (about 5 cm, about 50 mm) advantageously may be used to assist in minimizing mechanically induced stresses at the crack tip. The plot in FIG. 15 was generated with a central web portion thickness of 200 microns. When the central web portion has a thickness of 100 microns, the stresses are minimized at a similar overhang distance Dₒ as with the case for 200 microns. However, for the 100 micron case, the stresses appear to increase to a level greater than those for the 200 micron case as the web overhang distance Dₒ moves away from the minimum case (overhang of about 60 mm) in either direction.

Embodiments described herein can provide a lower baseline of mechanically induced flexible glass ribbon stress in the laser cutting zone and, therefore, increase the signal to noise ratio of laser induced stress to mechanical induced stress. That is, it is desirable to have the laser induced stress propagate the crack tip to separate the edges 102, 104 from the central portion 106. When the laser induced stress is disturbed by mechanical induced stresses, the crack propagation produces lower strength edges. Accordingly, it is desirable to minimize, to the extent possible, the amount of mechanically induced stresses that act on the crack tip as it propagates. Manipulation of overall flexible glass ribbon stability (to minimize mechanical induced stress) is provided through various tools that control the positions of the central (product) portion of the flexible glass ribbon and of the beaded edges. Conveyance path geometries are provided that can reduce or minimize contact between newly created edges and the central portion of the flexible glass ribbon downstream of the laser cutting process, which leads to higher maintained strength in the edges of the desired central portion of the glass ribbon; and this is done in a manner that minimizes mechanical induced stress at the crack tip.

It should be emphasized that the above-described embodiments of the present invention, particularly any "preferred" embodiments, are merely possible examples of implementations, merely set forth for a clear understanding of various principles of the invention. Many variations and modifications may be made to the above-described embodiments of the invention without departing substantially from the various principles of the invention. All such modifications and variations are intended to be included herein within the scope of this disclosure and the following claims.

## Claims

1. A method of continuous processing of flexible glass ribbon (46) having a thickness of no more than 0.35 mm using a glass processing apparatus (100), the method comprising:
continuously feeding the flexible glass ribbon (46) through the glass processing apparatus (100), the glass processing apparatus (100) comprising at least three processing zones including a first processing zone (A), a second processing zone (B) and a third processing zone (C); and
controlling a feed rate of the flexible glass ribbon (46) through each of the first processing zone (A), second processing zone (B) and third processing zone (C); and
wherein the second processing zone (B) has a conveyance path (P) for the flexible glass ribbon (46) through a cutting zone (140) having a radius of curvature,
**characterised in that** the radius of curvature is from 2.54 metres (100 inches) to 10.16 metres (400 inches), and **in that** the feed rate is controlled using a global control device (70).

2. The method of claim 1, further comprising separating an edge (102, 104) of the flexible glass ribbon (46) as the flexible glass ribbon (46) moves by a cutting device (174) within the cutting zone (140) forming a continuous strip of edge trim (210, 212) connected to an upstream portion of the flexible glass ribbon (46).

3. The method of claim 2, wherein the edge trim (210, 212) has a conveyance path (P') that is different from the conveyance path (P) of a central portion of the flexible glass ribbon (46).

4. The method of claim 1 or claim 2, wherein the conveyance path (P) has an upstream portion that is upstream of the cutting zone (140), the upstream portion comprising a radius of curvature that is different than the radius of curvature of the cutting zone (140).

5. The method of any one of claims 1, 2, or 4, wherein the conveyance path (P) has a downstream portion that is downstream of the cutting zone, the downstream portion comprising a radius of curvature that is different than the radius of curvature of the cutting zone (140).

6. The method of any one of claims 1, 2, or 4-5, further comprising stabilizing the flexible glass ribbon (46) within the cutting zone (140) using at least one drive roller pair (272a, 272b, 274a, 274b, 275a, 276b).

7. The method of any one of claims 1, 2, or 4-6, wherein the flexible glass ribbon (46) further comprises an overhang portion (340) that extends freely beyond an outermost air bearing (342) in the cutting zone (140).

8. The method of claim 7, wherein the overhang portion (340) extends freely beyond the outermost air bearing (342) in the cutting zone (140) a distance of about 1 inch to about 4 inches.

9. The method of claim 6, further comprising controlling the at least one drive roller pair (272a, 272b, 274a, 274b, 275a, 276b) so as to maintain a lateral separation, between web portions, of 0.2 mm or less at a position of 725 mm downstream of the crack tip.

10. A glass processing apparatus (100) that processes a flexible glass ribbon (46) having a thickness of no more than 0.35 mm comprising:
a forming apparatus (22) in a first processing zone (A), the forming apparatus (22) configured to form the flexible glass ribbon (46) in the first processing zone (A);
an edge trimming apparatus (170) in a cutting zone (140) of a second processing zone (B), the edge trimming apparatus (170) comprising a cutting device (174) configured to separate an edge (102, 104) of the flexible glass ribbon (46) as the flexible glass ribbon (46) moves; and
wherein the second processing zone (B) has a conveyance path (P) for the flexible glass ribbon (46) through the cutting zone (140) having a radius of curvature,
**characterised in that** the radius of curvature is from 2.54 metres (100 inches) to 10.16 metres (400 inches).

11. The glass processing apparatus (100) of claim 10, wherein a central portion of the flexible glass ribbon (46) has the conveyance path (P), the continuous strip of edge trim (210, 212) having a different conveyance path downstream of the edge trimming apparatus (170).

12. The glass processing apparatus (100) of claim 10 or claim 11, wherein the conveyance path (P) comprises an upstream portion that is upstream of the cutting zone (140), the upstream portion comprising a radius of curvature that is different than the radius of curvature of the conveyance path (P) through cutting zone (140).

13. The glass processing apparatus (100) of any one of claims 10-12, wherein the conveyance path (P) comprises a downstream portion that is downstream of the cutting zone (140), the downstream portion comprising a radius of curvature that is different than the radius of curvature of the conveyance path (P) through the cutting zone (140).

14. The glass processing apparatus (100) of any one of claims 10-13 further comprising at least one drive roller pair (272a, 272b, 274a, 274b, 275a, 276b) configured to stabilize the flexible glass ribbon (46) within the cutting zone (140).

15. The glass processing apparatus (100) of claim 14, wherein the at least one drive roller pair (272a, 272b, 274a, 274b, 275a, 276b) is configured to maintain a lateral separation between web portions of 0.2 mm or less at a position of 725 mm downstream of the crack tip.

## Patentansprüche

1. Verfahren zur kontinuierlichen Verarbeitung eines flexiblen Glasbandes (46) mit einer Dicke von nicht mehr als 0,35 mm unter Verwendung einer Glasverarbeitungseinrichtung (100), wobei das Verfahren Folgendes umfasst:
kontinuierliches Zuführen des flexiblen Glasbandes (46) durch die Glasverarbeitungseinrichtung (100), wobei die Glasverarbeitungseinrichtung (100) mindestens drei Verarbeitungszonen umfasst, die eine erste Verarbeitungszone (A), eine zweite Verarbeitungszone (B) und eine dritte Verarbeitungszone (C) enthalten; und
Steuern einer Vorschubgeschwindigkeit des flexiblen Glasbandes (46) durch jede der ersten Verarbeitungszone (A), zweiten Verarbeitungszone (B) und dritten Verarbeitungszone (C); und
wobei die zweite Verarbeitungszone (B) einen Förderweg (P) für das flexible Glasband (46) durch eine Schneidzone (140) mit einem Krümmungsradius aufweist,
**dadurch gekennzeichnet, dass** der Krümmungsradius von 2,54 m (100 Zoll) bis 10,16 m (400 Zoll) beträgt, und dass die Vorschubgeschwindigkeit unter Verwendung einer globalen Steuervorrichtung (70) gesteuert wird.

2. Verfahren nach Anspruch 1, das ferner das Abtrennen einer Kante (102, 104) des flexiblen Glasbandes (46) umfasst, wenn sich das flexible Glasband (46) an einer Schneidvorrichtung (174) innerhalb der Schneidzone (140) vorbeibewegt, wodurch ein kontinuierlicher Kantenverschnittstreifen (210, 212), der mit einem stromaufwärtigen Abschnitt des flexiblen Glasbandes (46) verbunden ist, ausgebildet wird.

3. Verfahren nach Anspruch 2, wobei der Kantenverschnitt (210, 212) einen Förderweg (P') aufweist, der sich von dem Förderweg (P) eines zentralen Abschnitts des flexiblen Glasbandes (46) unterscheidet.

4. Verfahren nach Anspruch 1 oder Anspruch 2, wobei der Förderweg (P) einen stromaufwärtigen Abschnitt aufweist, der stromaufwärts der Schneidzone (140) liegt, wobei der stromaufwärtige Abschnitt einen Krümmungsradius umfasst, der sich von dem Krümmungsradius der Schneidzone (140) unterscheidet.

5. Verfahren nach einem der Ansprüche 1, 2 oder 4, wobei der Förderweg (P) einen stromabwärtigen Abschnitt aufweist, der stromabwärts der Schneidzone liegt, wobei der stromabwärtige Abschnitt einen Krümmungsradius umfasst, der sich von dem Krümmungsradius der Schneidzone (140) unterscheidet.

6. Verfahren nach einem der Ansprüche 1, 2 oder 4-5, ferner umfassend das Stabilisieren des flexiblen Glasbandes (46) innerhalb der Schneidzone (140) unter Verwendung mindestens eines Antriebsrollenpaars (272a, 272b, 274a, 274b, 275a, 276b).

7. Verfahren nach einem der Ansprüche 1, 2 oder 4-6, wobei das flexible Glasband (46) ferner einen Überhangabschnitt (340) umfasst, der sich frei über ein äußerstes Luftlager (342) in der Schneidzone (140) hinaus erstreckt.

8. Verfahren nach Anspruch 7, wobei sich der Überhangabschnitt (340) in der Schneidzone (140) über einen Abstand von ungefähr 1 Zoll bis ungefähr 4 Zoll frei über das äußerste Luftlager (342) hinaus erstreckt.

9. Verfahren nach Anspruch 6, ferner umfassend das Steuern des mindestens einen Antriebsrollenpaars (272a, 272b, 274a, 274b, 275a, 276b), um einen seitlichen Abstand zwischen Bahnabschnitten von 0,2 mm oder weniger an einer Position 725 mm stromabwärts der Rissspitze aufrechtzuerhalten.

10. Glasverarbeitungseinrichtung (100), die ein flexibles Glasband (46) mit einer Dicke von nicht mehr als 0,35 mm verarbeitet, umfassend:
eine Ausbildungseinrichtung (22) in einer ersten Verarbeitungszone (A), wobei die Ausbildungseinrichtung (22) dazu konfiguriert ist, das flexible Glasband (46) in der ersten Verarbeitungszone (A) auszubilden;
eine Kantenschneideinrichtung (170) in einer Schneidzone (140) einer zweiten Verarbeitungszone (B), wobei die Kantenschneideinrichtung (170) eine Schneidvorrichtung (174) umfasst, die dazu konfiguriert ist, eine Kante (102, 104) des flexiblen Glasbandes (46) abzutrennen, wenn sich das flexible Glasband (46) bewegt; und
wobei die zweite Verarbeitungszone (B) einen Förderweg (P) für das flexible Glasband (46) durch die Schneidzone (140) mit einem Krümmungsradius aufweist;
**dadurch gekennzeichnet, dass** der Krümmungsradius zwischen 2,54 m (100 Zoll) und 10,16 m (400 Zoll) liegt.

11. Glasverarbeitungseinrichtung (100) nach Anspruch 10, wobei ein zentraler Abschnitt des flexiblen Glasbandes (46) den Förderweg (P) aufweist, wobei der kontinuierliche Kantenverschnittstreifen (210, 212) einen anderen Förderweg stromabwärts der Kantenschneideinrichtung (170) aufweist.

12. Glasverarbeitungseinrichtung (100) nach Anspruch 10 oder Anspruch 11, wobei der Förderweg (P) einen stromaufwärtigen Abschnitt umfasst, der stromaufwärts der Schneidzone (140) liegt, wobei der stromaufwärtige Abschnitt einen Krümmungsradius umfasst, der sich von dem Krümmungsradius des Förderweges (P) durch die Schneidzone (140) unterscheidet.

13. Glasverarbeitungseinrichtung (100) nach einem der Ansprüche 10-12, wobei der Förderweg (P) einen stromabwärtigen Abschnitt umfasst, der stromabwärts der Schneidzone (140) liegt, wobei der stromabwärtige Abschnitt einen Krümmungsradius aufweist, der sich von dem Krümmungsradius des Förderweges (P) durch die Schneidzone (140) unterscheidet.

14. Glasverarbeitungseinrichtung (100) nach einem der Ansprüche 10-13, ferner umfassend mindestens ein Antriebsrollenpaar (272a, 272b, 274a, 274b, 275a, 276b), das dazu konfiguriert ist, das flexible Glasband (46) innerhalb der Schneidzone (140) zu stabilisieren.

15. Glasverarbeitungseinrichtung (100) nach Anspruch 14, wobei das mindestens eine Antriebsrollenpaar (272a, 272b, 274a, 274b, 275a, 276b) dazu konfiguriert ist, einen seitlichen Abstand zwischen Bahnabschnitten von 0,2 mm oder weniger an einer Position 725 mm stromabwärts der Rissspitze aufrechtzuerhalten.

## Revendications

1. Procédé d'usinage en continu de ruban de verre souple (46) possédant une épaisseur inférieure ou égale à 0,35 mm à l'aide d'un appareil d'usinage de verre (100), le procédé comprenant :
l'alimentation en continu en ruban de verre souple (46) à travers l'appareil d'usinage de verre (100), l'appareil d'usinage de verre (100) comprenant au moins trois zones d'usinage comprenant une première zone d'usinage (A), une deuxième zone d'usinage (B) et une troisième zone d'usinage (C) ; et
la commande d'une vitesse d'alimentation du ruban de verre souple (46) à travers chacune de la première zone d'usinage (A), de la deuxième zone d'usinage (B) et de la troisième zone d'usinage (C) ; et
ladite deuxième zone d'usinage (B) possédant un trajet d'acheminement (P) pour le ruban de verre souple (46) à travers une zone de coupe (140) possédant un rayon de courbure,
**caractérisé en ce que** le rayon de courbure va de 2,54 mètres (100 pouces) à 10,16 mètres (400 pouces), et **en ce que** la vitesse d'alimentation est commandée à l'aide d'un dispositif de commande globale (70).

2. Procédé selon la revendication 1, comprenant en outre la séparation d'un bord (102, 104) du ruban de verre souple (46) tandis que le ruban de verre souple (46) se déplace au moyen d'un dispositif de coupe (174) à l'intérieur de la zone de coupe (140) formant un bande de taille de bord (210, 212) reliée à une partie amont du ruban de verre souple (46).

3. Procédé selon la revendication 2, ladite taille de bord (210, 212) possédant un trajet d'acheminement (P') qui est différent du trajet d'acheminement de transport (P) d'une partie centrale du ruban de verre souple (46).

4. Procédé selon la revendication 1 ou la revendication 2, ledit trajet de d'acheminement (P) comportant une partie en amont qui est en amont de la zone de coupe (140), la partie en amont comprenant un rayon de courbure qui est différent du rayon de la zone de coupe (140).

5. Procédé selon l'une quelconque des revendications 1, 2 ou 4, ledit trajet d'acheminement (P) comportant une partie en aval qui est en aval de la zone de coupe, la partie aval comprenant un rayon de courbure qui est différent du rayon de courbure de la zone de coupe (140).

6. Procédé selon l'une quelconque des revendications 1, 2 ou 4 à 5, comprenant en outre la stabilisation du ruban de verre souple (46) dans la zone de coupe (140) à l'aide d'au moins une paire de rouleaux d'entraînement (272a, 272b, 274a, 274b, 275a, 276b).

7. Procédé selon l'une quelconque des revendications 1, 2 ou 4 à 6, ledit ruban de verre souple (46) comprenant en outre une partie en surplomb (340) qui s'étend librement au-delà d'un palier à air le plus à l'extérieur (342) dans la zone de coupe (140).

8. Procédé selon la revendication 7, ladite partie en surplomb (340) s'étendant librement au-delà du palier à air le plus extérieur (342) dans la zone de coupe (140) sur une distance d'environ 1 pouce à environ 4 pouces.

9. Procédé selon la revendication 6, comprenant en outre la commande de la au moins une paire de rouleaux d'entraînement (272a, 272b, 274a, 274b, 275a, 276b) de façon à maintenir une séparation latérale, entre les parties de bande, inférieure ou égale à 0,2 mm au niveau d'une position de 725 mm en aval de la pointe de fissure.

10. Appareil d'usinage de verre (100) qui usine un ruban de verre souple (46) possédant une épaisseur inférieure ou égale à 0,35 mm comprenant :
un appareil de formage (22) dans une première zone d'usinage (A), l'appareil de formage (22) étant conçu pour former le ruban de verre souple (46) dans la première zone d'usinage (A) ;
un appareil de taillage de bord (170) dans une zone de coupe (140) d'une deuxième zone d'usinage (B), l'appareil de taille de bord (170) comprenant un dispositif de coupe (174) conçu pour séparer un bord (102, 104) du ruban de verre souple (46), tandis que le ruban de verre souple (46) se déplace ; et
ladite deuxième zone d'usinage (B) possédant un trajet d'acheminement (P) pour le ruban de verre souple (46) à travers la zone de coupe (140) possédant un rayon de courbure,
**caractérisé en ce que** le rayon de courbure va de 2,54 mètres (100 pouces) à 10,16 mètres (400 pouces).

11. Appareil d'usinage de verre (100) selon la revendication 10, une partie centrale du ruban de verre souple (46) possédant le trajet d'acheminement (P), la bande continue de taille de bord (210, 212) possédant un trajet d'acheminement différent en aval de l'appareil de taillage de bord (170).

12. Appareil d'usinage de verre (100) selon la revendication 10 ou la revendication 11, ledit trajet d'acheminement (P) comprenant une partie en amont qui est en amont de la zone de coupe (140), la partie en amont comprenant un rayon de courbure qui est différent du rayon de courbure du trajet d'acheminement (P) à travers la zone de coupe (140).

13. Appareil d'usinage de verre (100) selon l'une quelconque des revendications 10 à 12, ledit trajet d'acheminement (P) comprenant une partie en aval qui est en aval de la zone de coupe (140), la partie en aval comprenant un rayon de courbure qui est différent du rayon de courbure du trajet d'acheminement (P) à travers la zone de coupe (140).

14. Appareil d'usinage de verre (100) selon l'une quelconque des revendications 10 à 13, comprenant en outre au moins une paire de rouleaux d'entraînement (272a, 272b, 274a, 274b, 275a, 276b) conçue pour stabiliser le ruban de verre souple (46) dans la zone de coupe (140).

15. Appareil d'usinage de verre (100) selon la revendication 14, ladite au moins une paire de rouleaux d'entraînement (272a, 272b, 274a, 274b, 275a, 276b) étant conçue pour maintenir une séparation latérale entre les parties de bande inférieure ou égale à 0,2 mm au niveau d'une position de 725 mm en aval de la pointe de fissure.
